# EUROPEAN PATENT APPLICATION

(11) **EP 2 879 443 A1**
(43) Date of publication of application: **03.06.2015**
(21) Application number: 14185337.4
(22) Date of filing: 18.09.2014
(51) Int. Cl.: H04W 48/16, H04W 64/00, H04W 4/02

(54) **Wireless terminal, wireless communication method, and wireless communication system**

(30) Priority: 24.10.2013 JP 2013221654
(71) Applicant: FUJITSU LIMITED, Kawasaki-shi, Kanagawa 211-8588 (JP)
(72) Inventor: Saito, Naritoshi, Kawasaki-shi, Kanagawa 211-8588 (JP)
(74) Representative: Lewin, David Nicholas

(57) **Abstract**

A wireless terminal (300) includes a small cell information data base (321), an acquisition unit (311), and a communication unit (313). The small cell information data base (321) stores small cell information including position information and frequency information to be used when performing a wireless communication. The acquisition unit (311) obtains current position information. The communication unit (313) performs a wireless communication in a small cell by using frequency information obtained from the small cell information data base based on the current position information.

## Description

### FIELD

The embodiments discussed herein are related to a wireless terminal, a wireless communication method, and a wireless communication system.

### BACKGROUND

Small cells are attracting attention as communication means for large-volume communication such as streaming distribution of a moving image. Small cell wireless communications are characteristically usable when the moving speed of the wireless terminal is 3 km/h or less, and are unsuitable for use in conditions where a handover occurs frequently like on-train communications. A small cell base station covers a communication area narrower than that of a macrocell. The communication areas of a plurality of small cells are often included in the communication area of a macrocell.

Small cells have the following advantages. Suppose that a communication causing heavy traffic occurs in a communication area. Even in such a case, a small cell can take care of the communication to prevent the macrocell from congestion of communications. This provides the advantage of improved communication environment for other users. Even in situations where macrocell communications are likely to cause congestion of wireless communications and interference between frequencies in use, small cell communications provide the advantage of less interference with other communications at respective use frequencies since the communication areas of the small cells are narrower than that of the macrocell base station.

When starting a small cell communication, the wireless terminal selects a frequency to be used during the communication. To avoid interference with other communications, the wireless terminal performs a frequency search and selects a frequency of less interference. For the frequency search, the wireless terminal initially performs a synchronization processing of a Primary Synchronization Channel (PSC) and a Secondary Synchronization Channel (SSC). The synchronization processing uses a Universal Mobile Telecommunication System (UMTS), each frame of which is 10 ms and includes 15 slots. Each slot includes a PSC, an SSC, and a Primary Common Control Physical Channel (P-CCPCH). The wireless terminal then performs P-CCPCH demodulation and obtains a Public Land Mobile Network (PLMN) code from a Master Information Block (MIB) of a Broadcasting Control Channel (BCCH) signal. The wireless terminal searches frequencies by the foregoing procedure and starts a small cell wireless communication.

With regard to the conventional technologies, see Japanese Laid-open Patent Publication No. 2011-019149, Japanese Laid-open Patent Publication No. 2009-260448, and U.S. Laid-open Patent Publication No. 2009/0264134, for example.

However, small cell search consumes time and power.

If a wireless terminal performs a small cell search and finds no small cell or if the found small cell belongs to a company different from that the user has a communication contract with, the wireless terminal is not able to start communication in the small cell. In such a case, there is the problem that the wireless terminal wastes time and uselessly consumes power for the small cell search.

Accordingly, it is an object in one aspect of an embodiment of the invention to provide a wireless terminal, a wireless communication method, and a wireless communication system that can reduce useless consumption of time and power for a small cell search.

### SUMMARY

According to an aspect of an embodiment, a wireless terminal includes a small cell information data base, an acquisition unit, and a communication unit. The small cell information data base stores small cell information including position information and frequency information to be used when performing a wireless communication. The acquisition unit obtains current position information. The communication unit performs a wireless communication in a small cell by using frequency information obtained from the small cell information data base based on the current position information.

### BRIEF DESCRIPTION OF DRAWINGS

FIG. 1 is a diagram illustrating an example of a configuration of a wireless communication system;
FIG. 2 is a diagram illustrating a hardware configuration of an enhanced Node B (eNB) that is a base station according to an embodiment;
FIG. 3 is a diagram illustrating a hardware configuration of a wireless information center according to the first embodiment;
FIG. 4 is a diagram illustrating an example of a hardware configuration of a wireless terminal;
FIG. 5 is a functional block diagram illustrating a configuration of a wireless terminal according to a first embodiment;
FIG. 6A is a chart illustrating a first data configuration of a small cell data base (DB);
FIG. 6B is a chart illustrating a second data configuration of the small cell DB;
FIG. 7 is a diagram for explaining communication areas of a macrocell and small cells;
FIG. 8 is a functional block diagram illustrating a configuration of a wireless terminal according to a second embodiment;
FIG. 9 is a functional block diagram illustrating a configuration of a wireless information center;
FIG. 10 is a chart illustrating an example of a data configuration of an integrated DB;
FIG. 11 is a diagram for explaining update of the integrated DB;
FIG. 12 is a diagram for explaining a flow of processing when the wireless terminal transmits a small cell information request;
FIG. 13 is a diagram for explaining a flow of regular update of the small cell DB and the integrated DB;
FIG. 14 is a functional block diagram illustrating a configuration of a wireless terminal according to a third embodiment;
FIG. 15 is a diagram for explaining a flow of processing when switching small cell base stations;
FIG. 16 is a chart illustrating an example of a Time Division Duplex (TDD) format of a radio frame; and
FIG. 17 is a diagram illustrating an example of a subframe configuration when performing a wireless communication by a TDD method.

### DESCRIPTION OF EMBODIMENTS

Preferred embodiments of the present invention will be explained with reference to accompanying drawings. Note that this invention is not limited by such embodiments. The embodiments may be combined as appropriate without the processing contents contradicting each other.

### [a] First Embodiment

### Description of Apparatuses in System

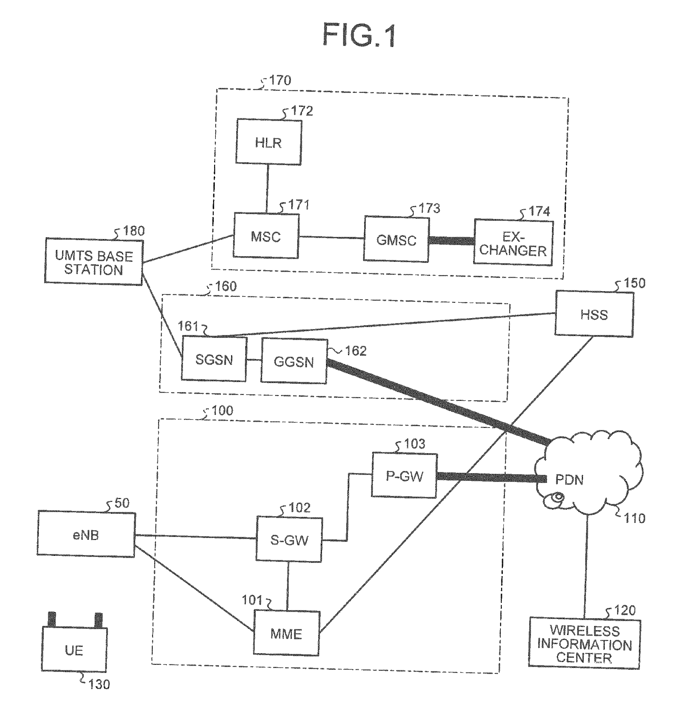

A flow of processing to be performed in the wireless communication system before starting a communication will be described. FIG. 1 is a diagram illustrating an example of a configuration of the wireless communication system. As illustrated in FIG. 1, a Long-Term Evolution (LTE) Advanced network 100 includes a Mobility Management Entity (MME) 101, a Serving Gateway (S-GW) 102, and a Packet Data Network-Gateway (P-GW) 103.

User Equipment (UE) 130 can establish a Radio Resource Control (RRC) connection with a nearby base station eNB 50. When the MME 101 receives a signal from the UE 130, the MME 101 accesses a Home Subscriber Server (HSS) 150 to perform user authentication. The HSS 150 stores the user's contract information and the like. The MME 101 further transmits a position registration request signal to the HSS 150 to store that the UE 130 is connected to the MME 101. Next, the HSS 150 transmits a position registration response signal to the MME 101.

The MME 101 transmits a bearer setting request signal to the S-GW 102. Next, the S-GW 102 transmits a route setting request signal to the P-GW 103. The P-GW 103 here assigns an IP address to the UE 130. Next, the P-GW 103 transmits a route setting response signal to the S-GW 102. Next, the S-GW 102 transmits a bearer setting response signal to the MME 101. Next, the MME 101 transmits an attachment completion notification signal to the UE 130 via the eNB 50. When starting a small cell wireless communication, the UE 130 is connected to a Packet Data Network (PDN) 110 via the eNB 50 and the LTE Advanced network 100. The UE 130 is a portable terminal such as a cellular phone, a notebook PC, a tablet PC, and a PDA.

A UMTS packet network 160 includes a Serving GPRS Support Node (SGSN) 161 and a Gateway GPRS Support Node (GGSN) 162. When transmitting a UMTS packet to a wireless information center 120 by using a macrocell, an UMTS base station 180 receives the UMTS packet, and transmits the UMTS packet to the wireless information center 120 via the SGSN 161, the GGSN 162, and the PDN.

A UMTS circuit switching network 170 includes a Mobile Switching Center (MSC) 171, a Home Location Register (HLR) 172, a Gateway Mobile Switching Center (GMSC) 173, and an exchanger 174. The MSC 171 switches and connects UMTS base stations 180. The HLR 172 registers and manages subscriber information about service subscribers in the UMTS circuit switching network 170, position information about the service subscribers, and authentication information in association with each other. The GMSC 170 switches and connects the exchanger 174 and the MSC 171.

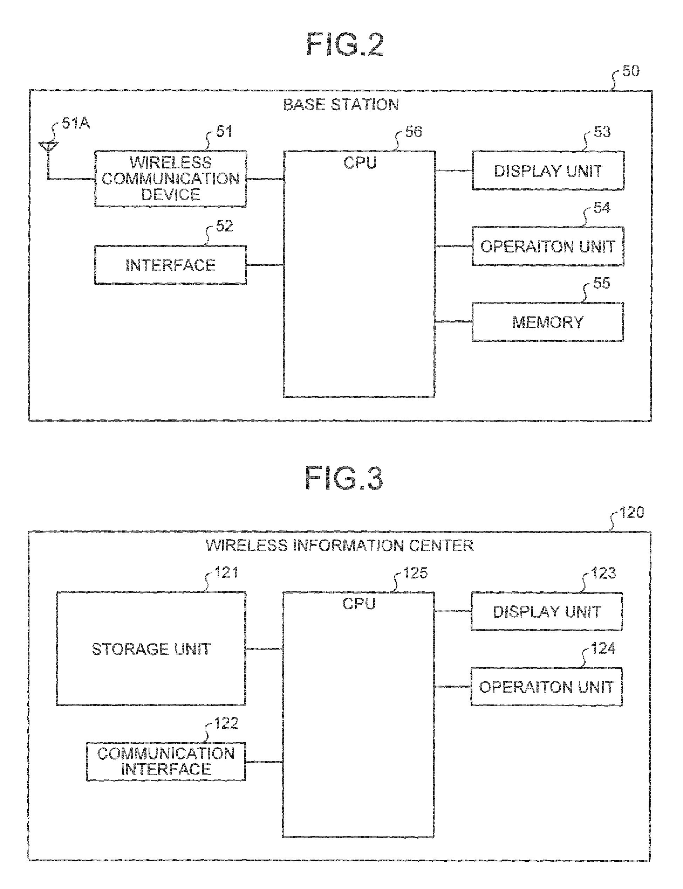

A hardware configuration of the eNB 50 and the wireless information center 120 will be described below. FIG. 2 is a diagram illustrating the configuration of the base station eNB according to the present embodiment. The eNB 50 includes a central processing unit (CPU) 56 which performs communication processing with a wireless terminal(s). The CPU 56 is connected to an interface 52, a display unit 53, an operation unit 54, and a memory 55. The CPU 56 is further connected to an antenna 51A via a wireless communication device 51. The antenna 51A performs wireless communication with each wireless terminal.

FIG. 3 is a diagram illustrating the hardware configuration of the wireless information center according to the first embodiment. The wireless information center 120 includes a CPU 125 which provides small cell information to wireless terminals. The CPU 125 is connected to a storage unit 121, a communication interface 122, a display unit 123, and an operation unit 124. As will be described later, the storage unit 121 includes an integrated DB.

### Hardware Configuration of Wireless Terminal

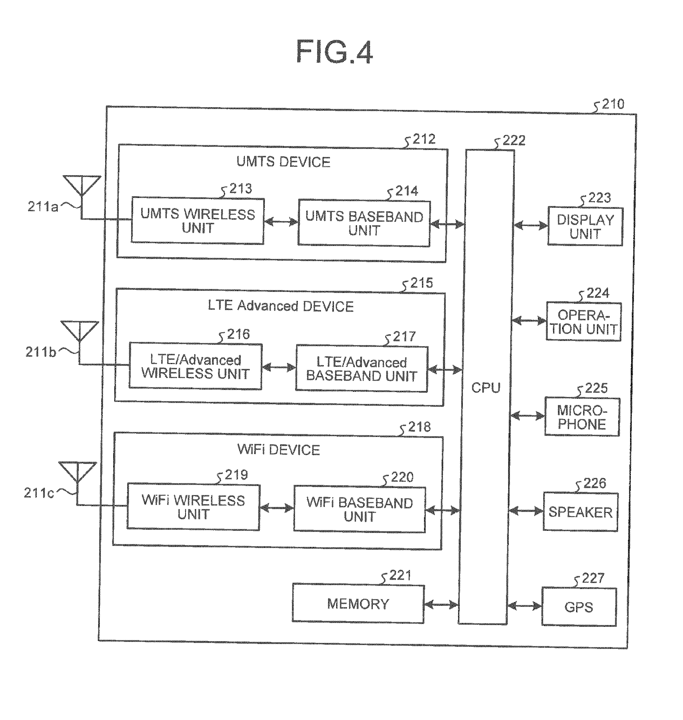

FIG. 4 is a diagram illustrating an example of the hardware configuration of a wireless terminal. As illustrated in FIG. 4, a wireless terminal UE 210 includes a UMTS device 212, an LTE Advanced device 215, a WiFi device 218, a memory 221, a CPU 222, a display unit 223, an operation unit 224, a microphone 225, a speaker 226, and a Global Positioning System (GPS) 227.

The UMTS device 212 includes a UMTS wireless unit 213 and a UMTS baseband unit 214. An antenna 211a is connected to the UMTS wireless unit 213, and transmits and receives radio waves. The LTE Advanced device 215 includes an LTE/Advanced wireless unit 216 and an LTE/Advanced baseband unit 217. An antenna 211b is connected to the LTE/Advanced wireless unit 216, and transmits and receives radio waves. The WiFi device 218 includes a WiFi wireless unit 219 and a WiFi baseband unit 220. An antenna 211c is connected to the WiFi wireless unit 219, and transmits and receives radio waves.

The UE 210 uses the LTE Advanced device 215 for small cell wireless communications. For example, the LTE/Advanced baseband unit 217 initially accepts current position information input by the GPS 227 from the CPU 222 and performs D/A conversion to convert the current position information into a baseband signal. Next, the LTE/Advanced wireless unit 216 converts the baseband signal accepted from the LTE/Advanced baseband unit 217 into an RF signal. The antenna 211b then transmits the RF signal to the wireless information center 120. When requesting small cell information from the wireless information center 120, the UE 210 uses the device 212 to transmit an SMS mail or the like. The requesting of the small cell information from the wireless information center 120 will be described in detail later.

### Functional Configuration of Wireless Terminal

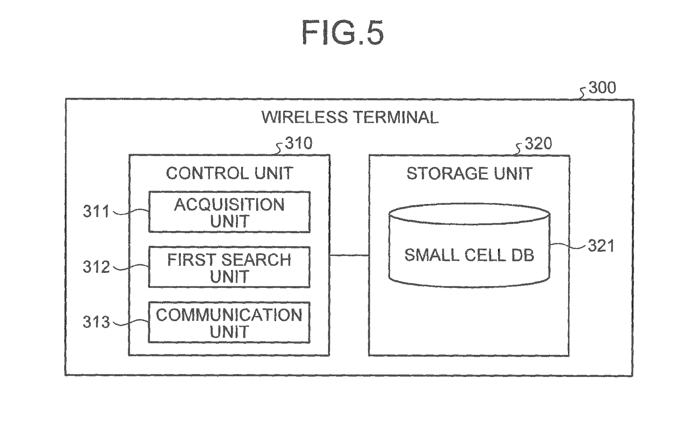

An example of the functional configuration of a wireless terminal 300 according to the first embodiment will be described. FIG. 5 is a functional block diagram illustrating the configuration of the wireless terminal 300 according to the first embodiment. As illustrated in FIG. 5, the wireless terminal 300 includes a control unit 310 and a storage unit 320.

As illustrated in FIG. 5, the storage unit 320 stores a small cell DB 321. The storage unit 320 corresponds to, for example, a semiconductor memory device such as a random access memory (RAM), a read only memory (ROM), and a flash memory, or a storage device such as a hard disk and an optical disc.

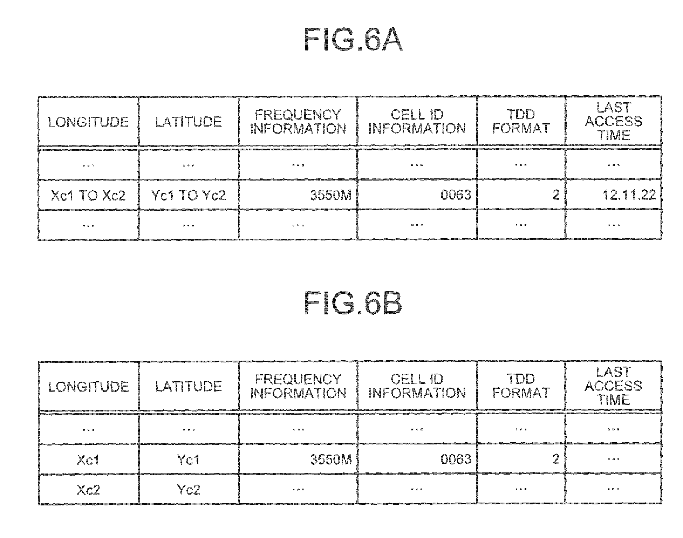

The small cell DB 321 is a data base of small cell information. The small cell information includes positions where small cell communications were performed in the past, frequencies used for the communications, and TDD formats used for the communications. The small cell DB 321 may store up to a predetermined number of pieces of small cell information in ascending order of frequency among the small cell information. FIG. 6A is a chart illustrating a first data configuration of the small cell DB 321. As illustrated in FIG. 6A, the small cell DB 321 associates longitude, latitude, frequency information, cell ID information, a TDD format, and a last access time with each other. The "longitude" and the "latitude" indicate a communication area corresponding to a small cell. The "frequency information" indicates the frequency used for the communication. The "cell ID information" is a number for uniquely identifying the small cell. The "TDD format" indicates a setting related to subframes assigned to uplink and downlink communications, respectively. The "last access time" indicates the time of the last access made under the condition of the current position, the frequency, the TDD format, and the like corresponding to the cell ID. The setting of the subframes assigned to the uplink and downlink communications will be described in detail later.

FIG. 6B is a chart illustrating a second data configuration of the small cell DB. In FIG. 6B, communication areas are specified by a method different from that of FIG. 6A. In FIG. 6A, a communication area is expressed by the ranges of the longitude and latitude. In FIG. 6B, a communication area is expressed by the center longitude and center latitude of the communication area.

As illustrated in FIG. 5, the control unit 310 includes an acquisition unit 311, a first search unit 312, and a communication unit 313. The functions of the control unit 310 can be implemented, for example, by an integrated circuit such as an application specific integrated circuit (ASIC) and a field programmable gate array (FPGA). The functions of the control unit 310 can also be implemented, for example, by a CPU executing a predetermined program.

The component members of the control unit 310 will be described along a flow of processing of the wireless terminal 300. The acquisition unit 311 initially obtains longitude "Xc1.5" and latitude "Yc1.5" concerning the current position information about the terminal by using a GPS or other function of the wireless terminal 300. "Xc1.5" corresponds to a position between "Xc1" and "Xc2." Next, the first search unit 312 extracts the corresponding cell ID information "0063" in the small cell DB 321 of FIG. 6A by using the obtained longitude "Xc1.5" and latitude "Yc1.5" concerning the current position of the terminal. The first search unit 312 transmits the small cell information corresponding to the cell ID information "0063" to the communication unit 313. Here, the first search unit 312 updates the last access time of the small cell DB 321. Next, the communication unit 313 obtains information such as the frequency information "3550 MHz" and the TDD format "2" from the obtained small cell information, and starts a small cell communication by setting the frequency for use in the communication to 3550 MHz and the TDD format to 2.

In other words, the acquisition unit 311 initially obtains the current position information about the terminal by using the GPS or other function of the wireless terminal 300. Next, the first search unit 312 extracts the small cell information from the small cell DB 321 based on the obtained current position information. Next, the communication unit 313 starts a small cell communication by using the information included in the obtained small cell information, such as the frequency information and the TDD format. The wireless terminal 300 can start wireless communications by omitting a small cell search to be performed when starting a small cell communication. This can reduce the useless consumption of time and power for a small cell search.

### [b] Second Embodiment

The wireless terminal does not store all the small cell information in its small cell DB but only small cell information of higher frequencies in view of the memory capacity. When the wireless terminal performs wireless communication by using small cell information not stored in the small cell DB, the wireless terminal transmits a small cell information request to the wireless information center via the base station of the macrocell. The wireless terminal thereby requests the small cell information from the wireless information center.

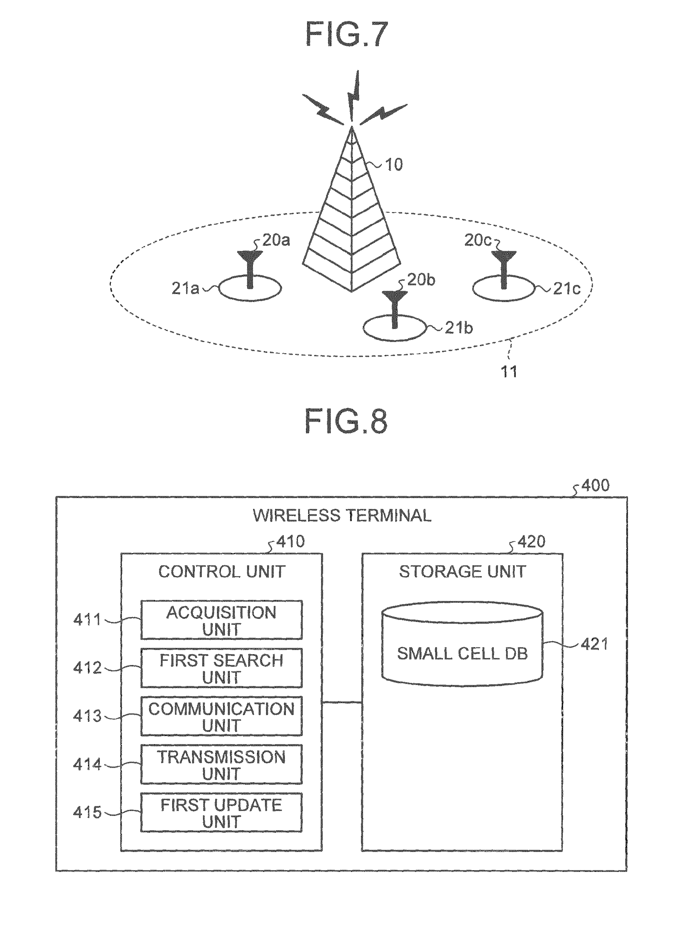

A relationship between a macrocell and a small cell will be described. FIG. 7 is a diagram for explaining the communication areas of a macrocell and small cells. As illustrated in FIG. 7, a communication area 11 pertaining to a macrocell base station 10 includes communication areas 21a, 21b, and 21c of small cell base stations 20a, 20b, and 20c. Suppose that a wireless terminal in the communication area 21a fails to find the small cell information corresponding to the current position information in the small cell DB. In such a case, the wireless terminal accesses the macrocell base station 10 and transmits a small cell information request to the wireless information center via the macrocell base station 10. The wireless terminal can transmit the small cell information request by means of an SMS mail, message, or the like. A functional configuration of the wireless terminal and the wireless information center according to a second embodiment will be described below.

### Functional Configuration of Wireless Terminal

An example of the functional configuration of a wireless terminal 400 according to the second embodiment will be described. FIG. 8 is a functional block diagram illustrating the configuration of the wireless terminal according to the second embodiment. As illustrated in FIG. 8, the wireless terminal 400 includes a control unit 410 and a storage unit 420.

As illustrated in FIG. 8, the storage unit 420 stores a small cell DB 421. The small cell DB 421 has the same data structure as that of the small cell DB 321 of first embodiment. The control unit 410 includes an acquisition unit 411, a first search unit 412, a communication unit 413, a transmission unit 414, and a first update unit 415.

The component members of the control unit 410 will be described along a flow of processing of the wireless terminal 400. The acquisition unit 411 obtains longitude "Xc3.5" and latitude "Yc3.5" concerning the current position information about the terminal by using a GPS or other function of the wireless terminal 400. "Xc3.5" corresponds to a position between "Xc3" and "Xc4." Next, the first search unit 412 searches the small cell DB 421 for small cell information corresponding to the obtained longitude "Xc3.5" and latitude "Yc3.5" concerning the current position of the terminal. Next, if small cell information corresponding to the current position is not found in the small cell DB 421, the transmission unit 414 transmits a small cell information request to the wireless information center. Next, the wireless terminal 400 obtains information such as frequency information "2450 MHz" and a TDD format "3" from small cell information notified from the wireless information center. The communication unit 413 then sets the frequency for use in communication to 2450 MHz and the TDD format to 3, and starts a small cell communication. Next, the first update unit 415 updates the small cell DB 421 based on the small cell information notified from the wireless information center. The processing of the wireless information center when receiving the small cell information request from the wireless terminal 400 will be described in detail later.

### Functional Configuration of Wireless Information Center

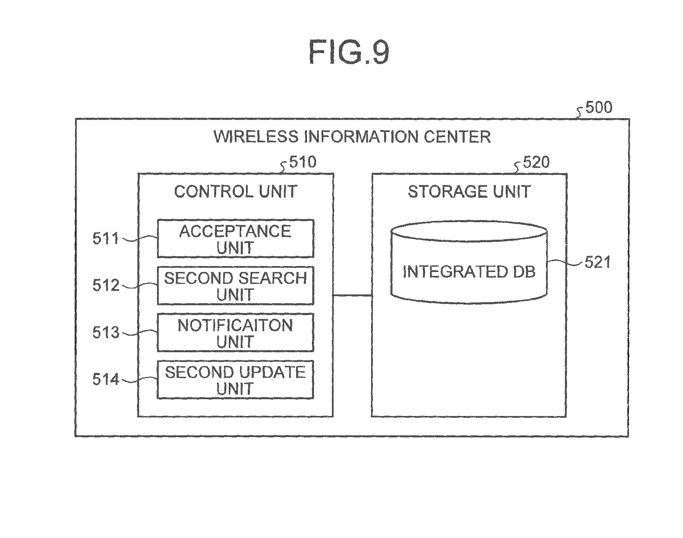

An example of the functional configuration of the wireless information center according to the second embodiment will be described. FIG. 9 is a functional block diagram illustrating the configuration of the wireless information center. As illustrated in FIG. 9, a wireless information center 500 includes a control unit 510 and a storage unit 520.

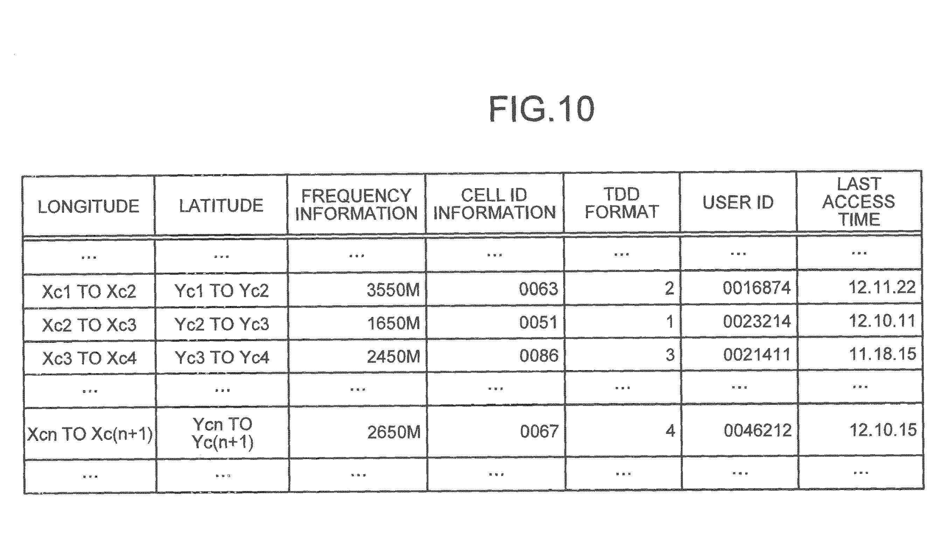

As illustrated in FIG. 9, the storage unit 520 stores an integrated DB 521. The integrated DB 521 stores the small cell information included in the small cell DBs 421 of wireless terminals 400 in an integrated manner with respect to each wireless terminal. FIG. 10 is a chart illustrating an example of a data configuration of the integrated DB. The integrated DB 521 associates longitude, latitude, frequency information, cell ID information, a TDD format, a user ID, and a last access time with each other. The integrated DB 521 has the data configuration as that of the small cell DB 321 of the first embodiment except that the "user ID" is included as one of the items. The "user ID" is a number for uniquely identifying the user who has transmitted the small cell information to the wireless information center 500. While the small cell DB 421 of the wireless terminal 400 stores up to a predetermined number of pieces of small cell information in descending order of frequency among all the small cell information, the integrated DB 521 may be configured to store all the small cell information.

As illustrated in FIG. 9, the control unit 510 includes an acceptance unit 511, a second search unit 512, a notification unit 513, and a second update unit 514. The component members of the control unit 510 will be described along a flow of processing of the wireless information center 500. The acceptance unit 511 initially accepts the small cell information request from the wireless terminal. Next, the second search unit 512 searches the integrated DB 521 of FIG. 10 for small cell information corresponding to the longitude "Xc3.5" and latitude "Yc3.5" concerning the current position included in the small cell information request. Next, the second search unit 512 extracts the small cell information including the cell ID information "0086," the frequency information "2450 MHz," and the TDD format "3." Next, the notification unit 513 notifies the wireless terminal 400 of the extracted small cell information. The processing of the second update unit 514 will be described in detail later.

In other words, if small cell information corresponding to the current position is not found in the small cell DB 421 of the wireless terminal 400, the wireless terminal 400 and the wireless information center 500 perform the following processing. The acquisition unit 411 initially obtains the current position information about the terminal by using the GPS or other function of the wireless terminal 400. Next, the first search unit 412 searches the small cell DB 421 for the small cell information based on the obtained current position information. Next, if small cell information corresponding to the current position information is not found in the small cell DB 421, the transmission unit 414 transmits a small cell information request to the wireless information center via the macrocell.

The acceptance unit 511 of the wireless information center 500 accepts the small cell information request transmitted from the wireless terminal 400. Next, the second search unit 512 extracts the small cell information corresponding to the current position included in the small cell information request. Next, the notification unit 513 notifies the wireless terminal 400 of the extracted small cell information.

Next, the wireless terminal 400 notified of the small cell information by the wireless information center 500 makes settings of wireless communication by using the frequency information, the TDD format, and the like included in the notified small cell information, and starts a small cell communication. Next, the first update unit 415 updates the small cell DB 421 based on the small cell information notified from the wireless information center. As described above, the small cell DB 421 stores only the pieces of small cell information of relatively high use frequencies, and the integrated DB 521 stores all the small cell information. Only if the wireless terminal 400 uses small cell information not found in the small cell DB 421, the wireless terminal 400 requests the small cell information from the wireless information center 500. In such a manner, the storage capacity of the small cell DB 421 of the wireless terminal 400 can be suppressed.

### Regular Update of Integrated DB

The integrated DB 521 may be regularly updated to maintain consistency with the small cell DB 421 of each wireless terminal 400. For that purpose, the transmission unit 414 of the wireless terminal 400 initially transmits the pieces of small cell information stored in the small cell DB 421 to the wireless information center 500 regularly. Next, the acceptance unit 511 of the wireless information center 500 accepts the pieces of small cell information. Next, the second update unit 514 of the wireless information center 500 updates the integrated DB 521 based on the pieces of small cell information accepted. The transmission unit 414 of the wireless terminal 400 may regularly transmit the small cell information to the wireless information center 500 in late night hours or the like when the wireless terminal 400 is not used.

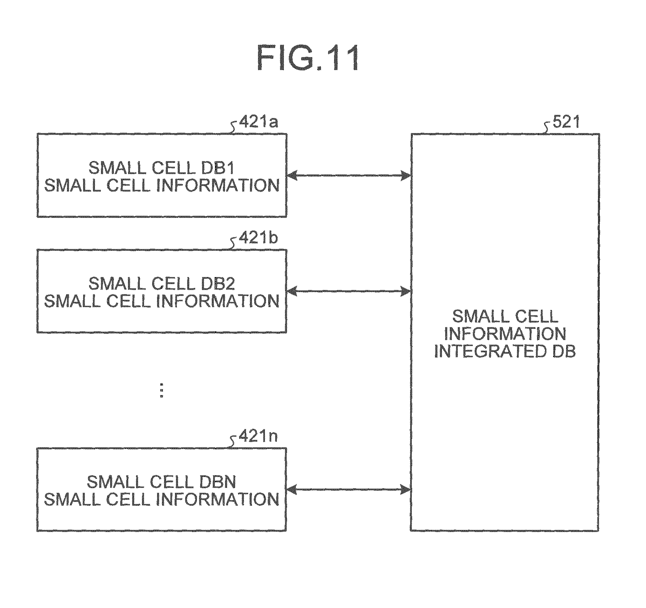

FIG. 11 is a diagram for explaining the update of the integrated DB. As illustrated in FIG. 11, small cell information 421a of a small cell DB1, small cell information 421b of a small cell DB2, small cell information 421n of a small cell DBN, and the like stored in respective wireless terminals 400 are transmitted to the integrated DB 521 stored in the wireless information center 500. The wireless information center 500 updates the integrated DB 521 based on the pieces of small cell information accepted.

### Regular Update of Small Cell DB

As described above, the wireless terminal 400 updates the small cell DB 421 when the wireless terminal 400 transmits a small cell information request to the wireless information center 500 and is notified of small cell information by the wireless information center 500. In addition, the wireless terminal 400 may regularly receive corresponding small cell information from the integrated DB 521 and update the small cell DB 421. For that purpose, the second search unit 512 of the wireless information center 500 searches the integrated DB 521 of FIG. 10 for small cell information related to the user ID of the user to be notified of small cell information. Next, the second search unit 512 searches the integrated DB 521 for small cell information of other users of which the communication area is the same as that of the small cell information of the user and the last access time is more recent than that of the small cell information of the user. If there is any piece of small cell information satisfying such a condition, the notification unit 513 notifies the wireless terminal 400 of each piece of small cell information satisfying the condition. Next, the first update unit 415 of the wireless terminal 400 updates the small cell DB 421 based on the pieces of small cell information notified. In such a manner, the wireless terminal 400 can reflect the small cell information of other users on its own small cell DB 421, whereby the latest communication status can be reflected on the small cell DB 421.

### Flow of Processing when Transmitting Small Cell Information Request to Wireless Information Center

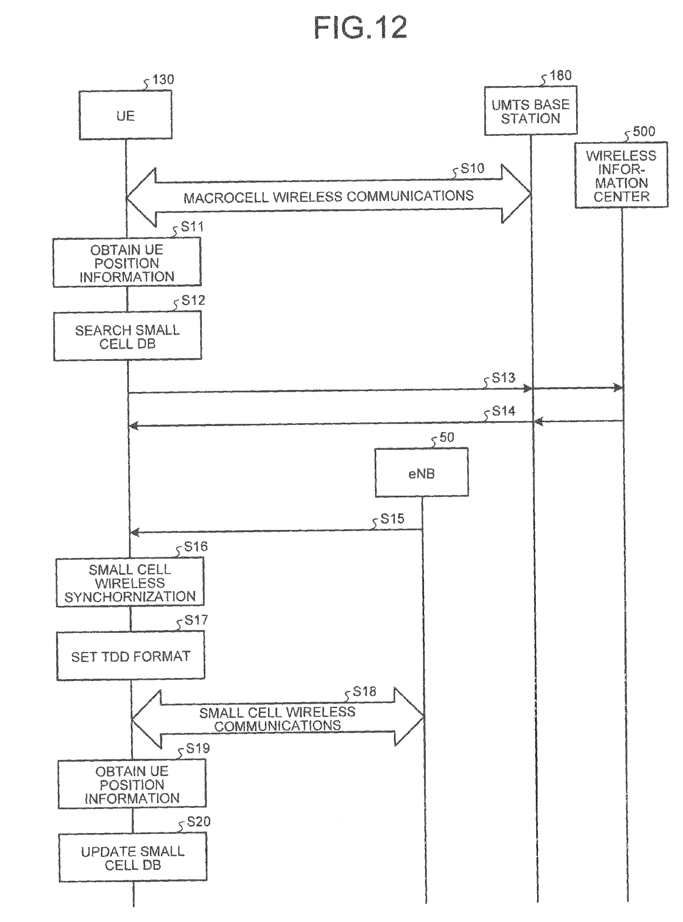

FIG. 12 is a diagram for explaining a flow of processing when the wireless terminal transmits a small cell information request. As illustrated in FIG. 12, the wireless terminal UE 130 is initially connected to the UMTS base station 180 in a communicable manner via a macrocell (step S10). Next, the UE 130 obtain the current position information about the UE 130 by using the GPS function or the like (step S11). Next, the UE 130 searches the small cell DB 421 for small cell information based on the obtained current position information (step S12). Next, if small cell information corresponding to the current position information is not found in the small cell DB 421, the UE 130 transmits a small cell information request to the wireless information center 500 via the macrocell through the UMTS base station 180 (step S13).

Next, the wireless information center 500 obtains the current position information from the received small cell information request. Next, the wireless information center 500 extracts the small cell information corresponding to the current position information from the integrated DB 521. Next, the wireless information center 500 transmits the extracted small cell information to the UE 130 via the UMTS base station 180 (step S14). Next, the UE 130 receives a small cell synchronization signal from the eNB 50 (step S15). Next, the UE 130 searches the small cell based on the received small cell information, and performs small cell wireless synchronization (step S16). Next, the UE 130 sets a TDD format based on the TDD format of the received small cell information (step S17). The UE 130 then starts small cell wireless communications with the eNB 50 (step S18).

Next, the UE 130 obtains the current position information (step S19). Next, the UE 130 updates the small cell DB 421 with the obtained current position information and the small cell information received from the wireless information center 500 (step S20).

Flow of Regular Update of Small Cell DB and Integrated DB

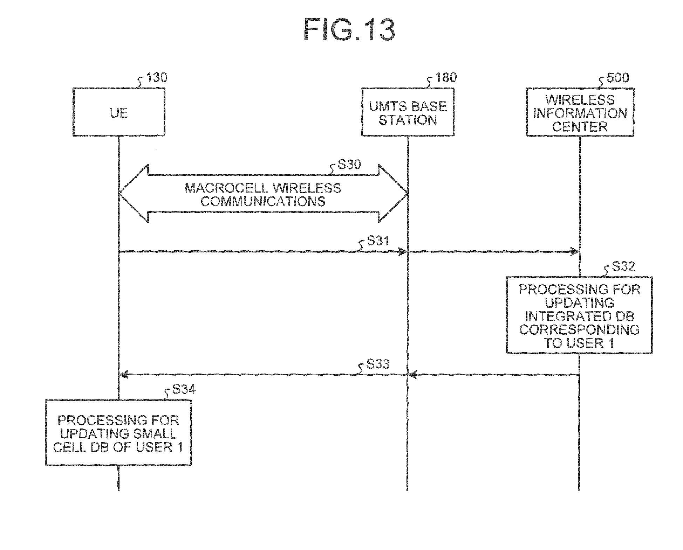

FIG. 13 is a diagram for explaining a flow of regular update of the small cell DB and the integrated DB. As illustrated in FIG. 13, the wireless terminal UE 130 possessed by user 1 is initially connected to the UMTS base station 180 in a communicable manner via the macrocell (step S30). Next, the UE 130 transmits the pieces of small cell information stored in the small cell DB 421 to the wireless information center 500 via the UMTS base station 180 (step S31). Next, the wireless information center 500 updates the pieces of small cell information corresponding to user 1 in the integrated DB 521 based on the pieces of small cell information received (step S32). Next, the wireless information center 500 searches the integrated DB 521 for small cell information of other users of which the communication area is the same as that of the small cell information concerning user 1 and the last access time is more recent than that of the small cell information of user 1. Next, the wireless information center 500 transmits the retrieved pieces of small cell information to the UE 130 (step S33). Next, the UE 130 performs processing for updating the small cell DB 421 based on the pieces of small cell information received (step S34).

### [c] Third Embodiment

If the user carries the wireless terminal around while performing small cell wireless communications, the distance to another base station may become shorter than to the current base station. The communications in the communication area of the small cell may be congested. In such cases, the electric field of the small cell communications can be weak. The wireless terminal then switches small cell base stations based on the small cell information stored in the small cell DB or the integrated DB.

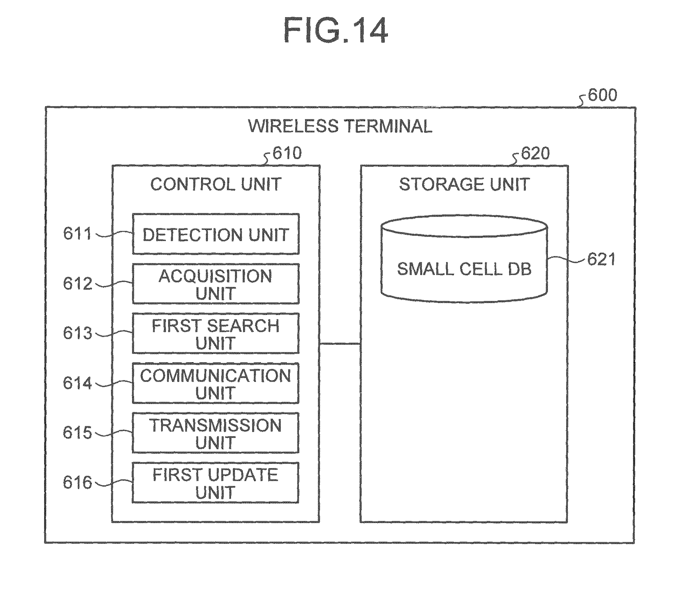

FIG. 14 is a functional block diagram illustrating a configuration of the wireless terminal according to a third embodiment. A wireless terminal 600 includes a control unit and a storage unit 620. The control unit 610 includes a detection unit 611, an acquisition unit 612, a first search unit 613, a communication unit 614, a transmission unit 615, and a first update unit 616. The storage unit 620 includes a small cell DB 621. The wireless terminal 600 is the same as the wireless terminal 400 of the second embodiment except that the control unit 610 includes the detection unit 611. The component members of the control unit 610 will be described along a flow of processing of the wireless terminal 600. The detection unit 611 initially detects a weak electric field during small cell wireless communications. Next, the acquisition unit 612 obtains the current position information about the terminal by using the GPS or other function of the wireless terminal 600. Next, the first search unit 613 searches the small cell DB 621 for small cell information other than that of the current small cell based on the obtained current position information. Next, if other small cell information is found in the small cell DB 621, the communication unit 614 starts small cell wireless communications by using the other small cell information.

On the other hand, if other small cell information is not found in the small cell DB 621, the transmission unit 615 transmits a small cell information request to the wireless information center via the macrocell. The communication unit 614 starts small cell wireless communications based on small cell information notified from the wireless information center. Next, the first update unit 616 updates the small cell DB 621 based on the small cell information notified from the wireless information center. As described above, even when the wireless terminal 600 switches to another small cell base station, the wireless terminal 600 can start wireless communications by omitting a small cell search. This can reduce the useless consumption of time and power for a small cell search.

The integrated DB 521 of FIG. 9 may store information about other wireless communications such as UMTS. When the wireless information center 500 receives a small cell information request from the wireless terminal 600, the wireless information center 500 may notify the wireless terminal 600 of the information about the other wireless communications instead of the small cell information. For example, suppose that a record of receiving a fast downlink communication service in the past is found not in the history of user 1 but in that of user 2 in the integrated DB 521. In such a case, the wireless information center 500 transmits the information about the communication service to the wireless terminal 600.

### Flow of Processing when Switching Small Cell Base Stations

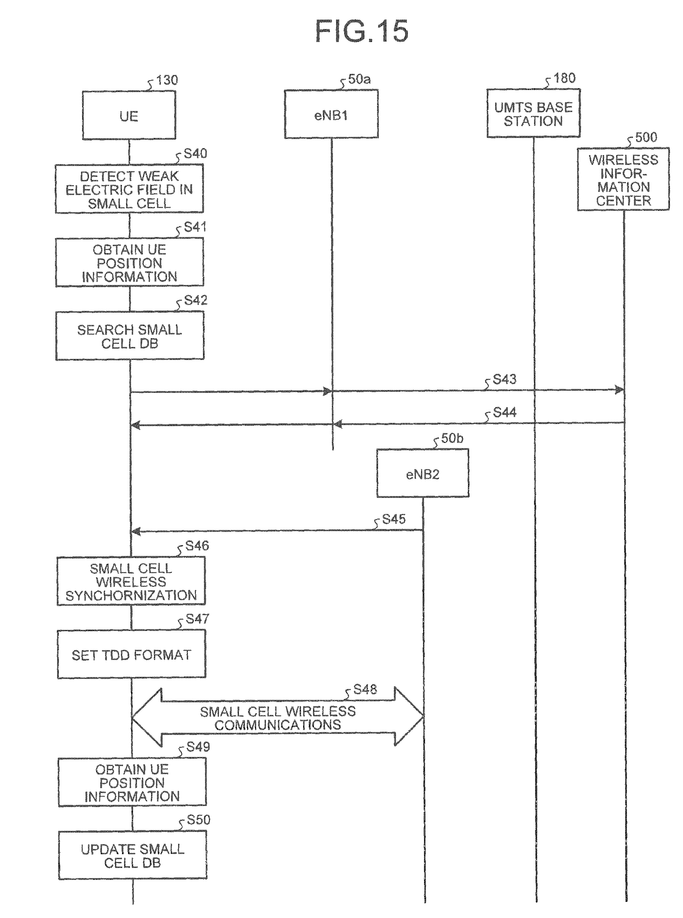

FIG. 15 is a diagram for explaining a flow of processing when switching small cell base stations. The UE 130 of the wireless terminal initially detects a weak electric field in the small cell (step S40). Next, the UE 130 obtains the current position information about the UE 130 by using the GPS function or the like (step S41). Next, the UE 130 searches the small cell DB 621 for small cell information concerning small cells other than the current small cell based on the obtained current position information (step S42). Next, if small cell information concerning other small cells is not found in the small cell DB 621, the UE 130 transmits a small cell information request to the wireless information center 500 via the small cell through an eNB1 50a (step S43).

Next, the wireless information center 500 obtains the current position information from the received small cell information request. Next, the wireless information center 500 extracts small cell information that corresponds to the current position information and corresponds to small cells other than the current small cell, from the integrated DB 521. Next, the wireless information center 500 transmits the extracted small cell information to the UE 130 (step S44).

Next, the UE 130 receives a small cell synchronization signal from an eNB2 50b (step S45). Next, the UE 130 searches the small cell based on the received small cell information, and performs small cell wireless synchronization (step S46). Next, the UE 130 sets a TDD format based on the TDD format of the received small cell information (step S47). The UE 130 then starts small cell wireless communications with the eNB2 50b (step S48).

Next, the UE 130 obtains the current position information (step S49). Next, the UE 130 updates the small cell DB 621 by using the obtained current position information and the small cell information received from the wireless information center 500 (step S50).

### Configuration of Frames and Subframes during Wireless Communications

An LTE physical layer includes frames in units of 10 ms in time. The wireless terminal uses the same frequency when performing wireless communications by the TDD method. According to the TDD method, times are allocated for respective uplink and downlink communications so that the communications are performed in a time-multiplexed manner.

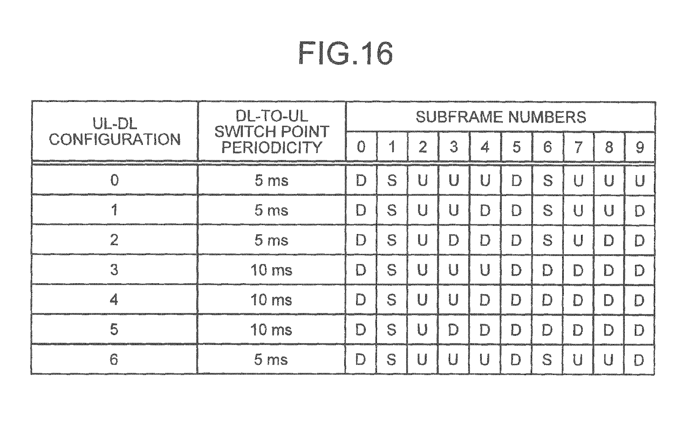

FIG. 16 is a chart illustrating an example of the TDD format of a radio frame. As illustrated in FIG. 16, a UL-DL configuration, a DL-to-UL switch point periodicity, and subframe numbers are associated with each other. The "UL-DL configuration" indicates the type of subframe allocation for uplink and downlink communications. As illustrated in FIG. 16, there are a total of seven types of configurations 0 to 6. The "DL-to-UL switch point periodicity" indicates the periodicity in which a subframe related to a switch point appears. The "subframe numbers" indicate the numbers of the respective subframes. The letters in the fields of the respective subframes indicate the types of the subframes. "U" represents a subframe allocated to the uplink communication. "D" represents a subframe allocated to the downlink communication. "S" represents a subframe allocated to the switch point. A radio frame includes a total of ten subframes.

For example, in configuration 0, six subframes are allocated to the uplink communication, two subframes are allocated to the downlink communication, and two substrates are allocated to the switch points. In configuration 1, four substrates are allocated to the uplink communication, four subframes are allocated to the downlink communication, and two subframes are allocated to the switch points. In the other configurations, subframes are similarly allocated to the uplink communication, the downlink communication, and the switch point.

The wireless terminal 400 of FIG. 8 can select a configuration to be used when performing small cell wireless communications, thereby increasing the speed of the uplink communication or increasing the speed of the downlink communication.

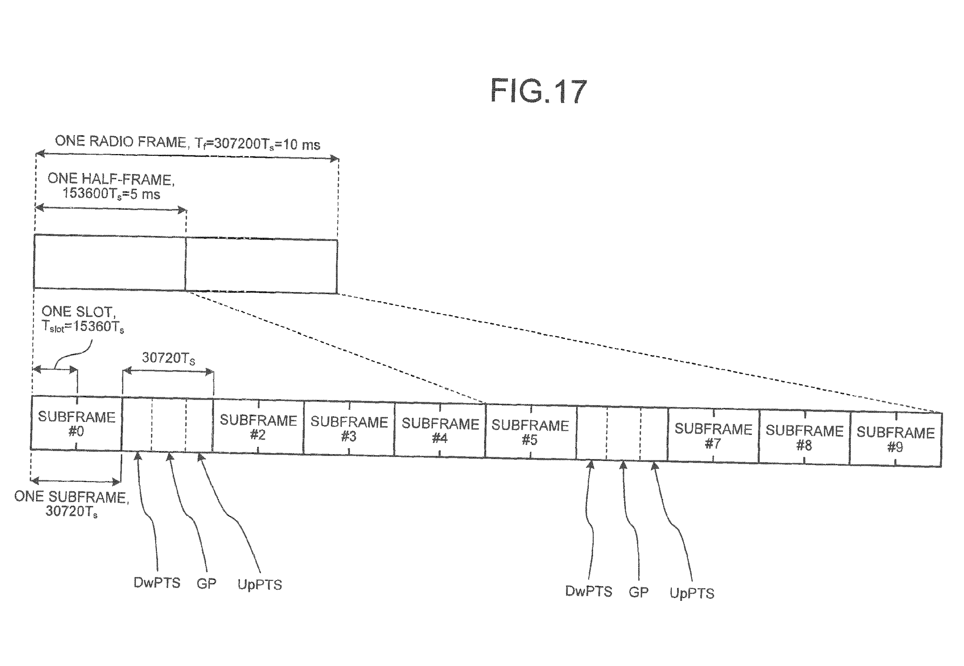

FIG. 17 is a diagram illustrating an example of a subframe configuration when performing wireless communications by the TDD method. As illustrated to the top in FIG. 17, one radio frame can be divided into two half-frames. In each half-frame, a switch point is assigned to one of the subframes. As also illustrated in FIG. 17, a switch point "S" is allocated in a position where a subframe "U" of the uplink communication and a subframe "D" of the downlink communication are switched.

As illustrated to the bottom in FIG. 17, the subframes pertaining to a switch point between "subframe #0" and "subframe #2" and one between "subframe #5" and "subframe #7" include a Downlink Pilot Time Slot (DwPTS), a Guard Period (GP), and an Uplink Pilot Time Slot (UpPTS) each. The DwPTS is an extended time for a downlink communication. The wireless terminal can increase the DwPTS to extend the time of the downlink communication. The UpPTS is an extended time for an uplink communication. The wireless terminal can increase the UpPTS to extend the time of the uplink communication. The GP is a time provided for preventing interference between the uplink and downlink communications.

During wireless communications, the variability of the DwPTS and UpPTS can make the allocation times of the uplink and downlink communications variable. This can solve a lot of problems occurring in wireless communications of the TDD method.

Several embodiments of the present application have been described in detail above with reference to the drawings. Such embodiments are only exemplary, and the present invention may be implemented in other forms in which various modifications and improvements are made based on the knowledge of those skilled in the art, including the aspect described in the summary of the invention.

The terms "section," "module," and "unit" used in the claim may be interpreted as "means", "circuit", and other terms. For example, the acquisition unit may be replaced with an acquisition means or an acquisition circuit.

All or part of the processing that has been described to be automatically performed (for example, the searching of the small cell DB) among the processing described in the foregoing embodiments may be manually performed. All or part of the processing that has been described to be manually performed may be automatically performed by a known method. The other processing procedures, control procedures, specific names, and information including various types of data and parameters described above and/or illustrated in the drawings may be arbitrarily modified unless otherwise specified.

According to an embodiment of the present invention, the effect of reducing useless consumption of time and power for a small cell search can be provided.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form

## Claims

1. A wireless terminal (300) comprising:
a small cell information data base (321) that stores small cell information including position information and frequency information to be used when performing a wireless communication;
an acquisition unit (311) that obtains current position information; and
a communication unit (313) that performs a wireless communication in a small cell by using frequency information obtained from the small cell information data base (321) based on the current position information.

2. A wireless communication system comprising a wireless terminal (400) and a center server (500), wherein:
the wireless terminal (400) includes
a small cell information data base (421) that stores small cell information including position information and frequency information to be used when performing a wireless communication, and
a transmission unit (414) that transmits a frequency information request to the center server (500) when frequency information corresponding to current position information is not found in the small cell information data base (421); and
the center server (500) includes
an integrated data base (521) that stores information included in small cell information data bases (421) included in a plurality of wireless terminals,
an acceptance unit (511) that accepts the frequency information request transmitted from the wireless terminal, and
a notification unit (513) that notifies the wireless terminal of frequency information obtained from the integrated data base based on the current position information included in the accepted frequency information request.

3. The wireless communication system according to claim 2, wherein the wireless terminal (400) further includes a first update unit (415) that updates the small cell information data base (421) based on the frequency information notified from the center server(500).

4. The wireless communication system according to claim 2 or 3, wherein:
the transmission unit (414) included in the wireless terminal (400) transmits each piece of frequency information stored in the small cell information data base (421) to the center server (500); and
the center server (500) further includes a second update unit (514) that updates the integrated data base (521) based on each piece of the frequency information accepted by the acceptance unit (511).

5. A wireless communication method to be executed by a computer, the method comprising:
obtaining current position information; and
performing a wireless communication in a small cell by using frequency information obtained from a small cell information data base based on the current position information, the small cell information data base storing small cell information including position information and frequency information to be used when performing a wireless communication.

6. A computer program which, when executed on a computer, causes the computer to carry out the method of claim 5.

7. A wireless communication method for controlling a communication between a wireless terminal (400) and a center server (500), the method comprising:
transmitting by the wireless terminal a frequency information request to the center server when frequency information corresponding to current position information is not found in a small cell information data base that stores small cell information including position information and frequency information to be used when performing a wireless communication;
accepting by the center server the frequency information request transmitted from the wireless terminal; and
notifying by the center server the wireless terminal of frequency information obtained from an integrated data base based on the current position information included in the accepted frequency information request, the integrated data base storing information included in small cell information data bases included in a plurality of wireless terminals.

8. A computer program which, when executed in a system comprising a wireless terminal (400) and a center server (500), causes the system to carry out the method of claim 7.
